# EUROPEAN PATENT SPECIFICATION

(11) **EP 0 631 903 B1**
(45) Date of publication and mention of the grant of the patent: **16.10.1996**
(21) Application number: 94304340.6
(22) Date of filing: 15.06.1994
(51) Int. Cl.: B60N 2/28, B60N 2/22

(54) **Child safety seat for automobile and reclining seat**
Sicherheitssitz für Kinder in Kraftfahrzeugen und verstellbarer Sitz
Siège de sécurité pour enfants dans des véhicules automobiles et siège reclinable

(30) Priority: 30.06.1993 JP 161898/93
(43) Date of publication of application: 04.01.1995
(73) Proprietor: APRICA KASSAI KABUSHIKI KAISHA, Osaka (JP)
(72) Inventor: Onishi, Ichiro, Chuo-ku, Osaka (JP); Kassai, Kenzou, Chuo-ku, Osaka (JP)
(74) Representative: Abbie, Andrew Kenneth

(56) References cited:
- EP-A- 0 426 585
- EP-A- 0 447 097
- BE-A- 1 002 003
- DE-U- 8 804 020
- DE-U- 9 201 796
- FR-A- 2 692 851

## Description

The present invention relates to a child safety seat for an automobile which is mountable on an original seat of an automobile for safely seating a child in the automobile and is provided with a reclining mechanism.

The present invention also relates, more generally, to a reclining seat as set forth in independent claim 10.

There is a child safety seat for an automobile which comprises a reclining mechanism for keeping a child in a comfortable position when it falls asleep on the seat, for example. Such a seat typically has a reclinable backrest portion. When this safety seat is mounted frontward on an original seat of the automobile and the angle of the backrest portion is adjusted, however, the backrest portion interferes with that of the original seat of the automobile. Therefore, the position for mounting the child safety seat on the original seat of the automobile must be changed every time the angle of the backrest portion is adjusted. In order to avoid such a trouble in adjustment of the angle of the backrest portion, there has been proposed a child safety seat for an automobile comprising a reclining mechanism having the following structure:

This type of child safety seat comprises a base which is fixed to an original seat of an automobile, and a seat body which is movably held by the base. The base is provided with a guide rail arcuately extending in a vertical plane, while the seat body is provided with a guide member which is guided to move along the guide rail. Thus, it is possible to change the angle of inclination of the seat body without interfering with the original seat of the automobile.

The aforementioned seat body is provided with backrest and seat portions in a fixed manner. When the seat body is inclined to adjust the angle of the backrest portion, therefore, a forward end of the seat portion is also raised up.

In such a state, however, the knees of the child are drawn up to apply a relatively large load on its hips, although the child can recline the upper half of its body on the backrest portion.

DE-U-9201796 cited during the examination of this application discloses a child safety seat for an automobile, comprising:
a backrest portion and a seat portion;
a seat body forming said backrest portion; and
a base movably holding said seat body,
said base and said seat body being coupled with each other by a relative movement guiding mechanism being formed by combination of a guide rail having a portion arcuately extending in a vertical plane and a guide member being guided to move along said guide rail,
said relative movement guiding mechanism comprising means for selectively fixing said guide member on a plurality of positions of said guide rail.

As with the proposed structure discussed above, in the seat disclosed in DE-U-9201796 the seat body forms not only the backrest portion of the seat but also the seat portion which is fixed relative to the backrest portion. Thus movement of the backrest portion to incline the same is accompanied by a corresponding movement of the seat portion as discussed above and the front end of the seat portion is raised.

An object of the invention is to enable the seat portion to be maintained at a substantially constant inclination to the base regardless of the angle to which the backrest is adjusted.

To this end the invention provides a child safety seat as defined in the last but two preceding paragraph characterised in that said seat portion is rotatably mounted to said seat body and in that coupling means are provided for coupling said base and said seat portion with each other for maintaining said seat portion in a substantially constant inclination regardless of movement of said seat body.

The invention also includes a reclining seat comprising a seat body defining a backrest portion of the seat mounted to a base for relative movement thereto along an arcuate path for adjusting the angle of the backrest portion to the base, characterized by a seat portion rotatably mounted to said seat body for movement relative thereto, and coupling means coupling said seat portion with said base for maintaining said seat portion at a substantially constant inclination to said base regardless of the angle to which the backrest portion is adjusted.

In order that the invention may be well understood, an embodiment thereof which is given by way of example only, will now be described with reference to the accompanying drawings, in which:
Fig. 1 is a longitudinal sectional view schematically showing a child safety seat 1 for an automobile according to an embodiment of the present invention as viewed from a side portion;
Fig. 2 is a longitudinal sectional view corresponding to Fig. 1, showing a seat body 3 in a position different from that shown in Fig. 1 with respect to a base 6;
Fig. 3 is an enlarged view showing a part of a guide rail 8;
Fig. 4 is a sectional view taken along the line IV - IV in Fig. 3;
Fig. 5 is an enlarged view showing a part of a guide member 9;
Fig. 6 is a sectional view taken along the line VI - VI in Fig. 5;
Fig. 7 is a sectional view taken along the line VII - VII in Fig. 5;
Fig. 8 is a sectional view showing the guide rail 8 and the guide member 9 which are in engagement with each other;
Fig. 9 is a sectional view showing a locking member 18 which is provided in relation to the guide member 9;
Fig. 10 is a sectional view showing a structure for controlling movement of the locking member 18 shown in Fig. 9; and
Fig. 11 is a sectional view schematically showing a structure for maintaining a seat portion 5 in a substantially constant inclination as viewed from a front portion of the child safety seat 1.

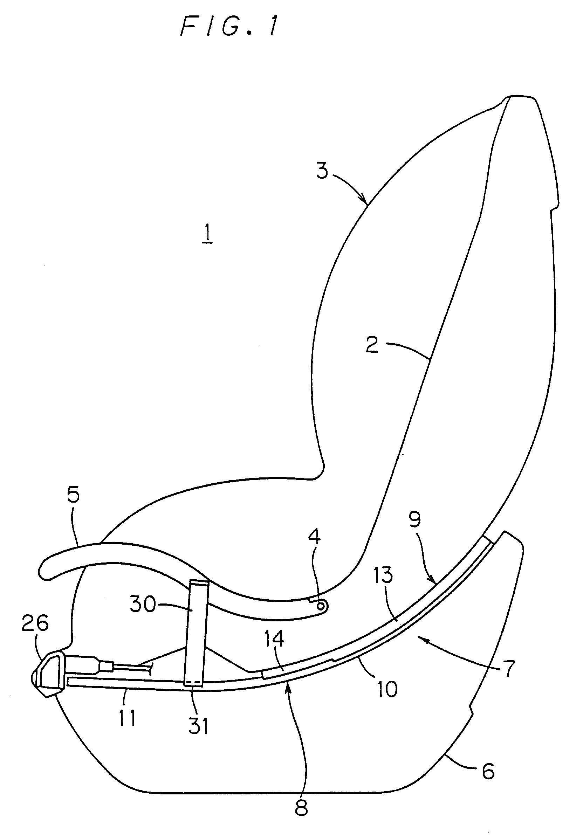

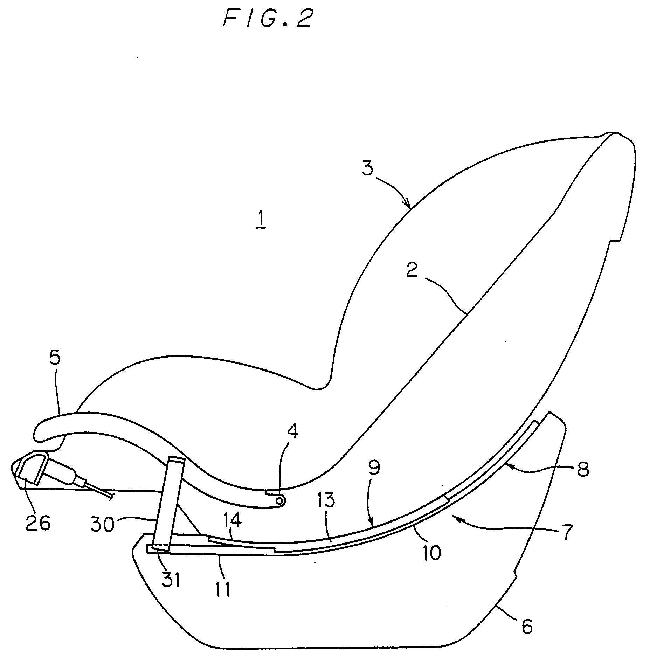

Figs. 1 and 2 are longitudinal sectional views schematically showing a child safety seat 1 for an automobile according to an embodiment of the present invention. A cushion member, a cover member etc. which are generally provided in such a child safety seat 1 are not shown in these figures.

This safety seat 1 comprises a seat body 3 forming a backrest portion 2, a seat portion 5 which is mounted to the seat body 3 to be rotatable about a pivot portion 4, and a base 6 movably holding the seat body 3. The base 6 is fixed to an original seat (not shown) of an automobile through a safety belt which is already provided on the original seat or the like.

The seat body 3 and the base 6 movably holding the same are coupled with each other by a relative movement guiding mechanism 7. The relative movement guiding mechanism 7 is formed by combination of a guide rail 8 and a guide member 9. According to this embodiment, the guide rail 8 is provided on the base 6, and the guide member 9 is provided on the seat body 3.

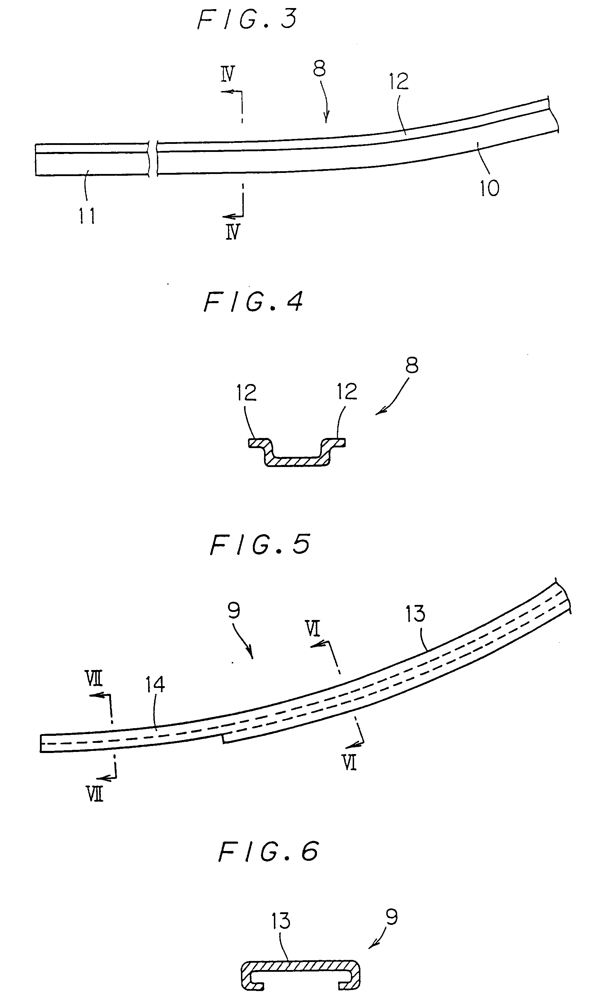

The guide rail 8 is formed by an arcuate portion 10 arcuately extending in a vertical plane, and a linear portion 11 linearly extending from one end of the arcuate portion 10. Fig. 3 shows a part of the guide rail 8 in an enlarged manner, and Fig. 4 shows a sectional view taken along the line IV - IV in Fig. 3. The guide rail 8 has a U-shaped section as a whole, with extensions 12 provided on both sides thereof.

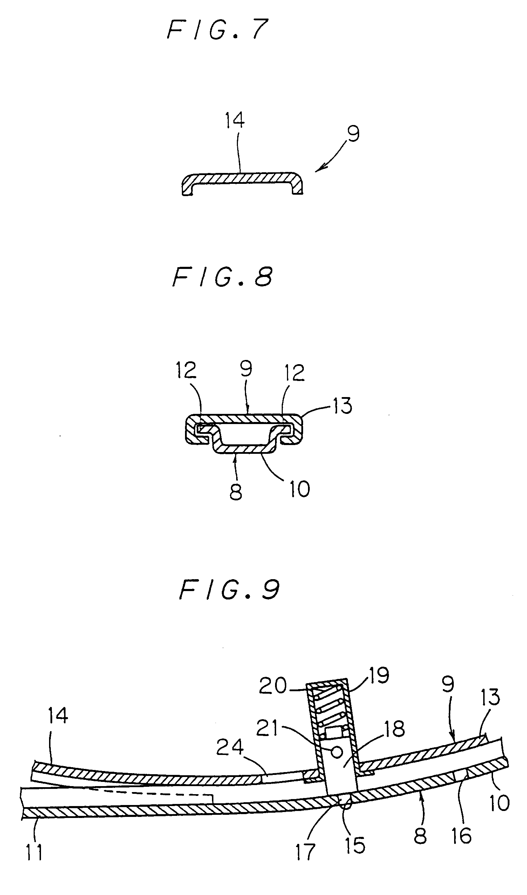

Fig. 5 shows a part of the guide member 9 in an enlarged manner, and Figs. 6 and 7 show sectional views taken along the lines VI - VI and VII - VII in Fig. 5 respectively.

The guide member 9 arcuately extends in correlation with the arcuate portion 10 of the aforementioned guide rail 8. As shown in Fig. 6, a principal part 13 of the guide member 9 has a lateral C-shaped section, to engage with the extensions 12 of the guide rail 8 as shown in Fig. 8. Thus, the guide member 9 can move along the guide rail 8.

An end 14 of the guide member 9 has a section shown in Fig. 7, not to engage with the guide rail 8. While such an end 14 is adapted to reinforce the seat body 3, it is not particularly necessary to form the same.

The relative movement guiding mechanism 7 also comprises means for selectively fixing the guide member 9 on a plurality of positions of the guide rail 8. According to this embodiment, the selective fixing means is provided by the following structure:

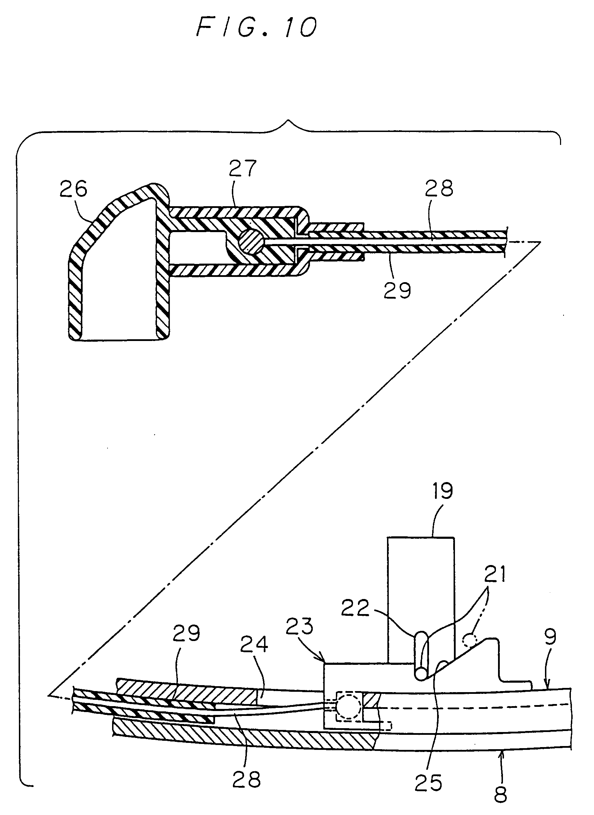

Referring to Fig. 9, the guide rail 8 has a plurality of engaging holes 15, 16, ... which are distributed along its longitudinal direction. On the other hand, the guide member 9 carries a locking member 18 provided with an engaging projection 17 which is movable for selective insertion in any one of the engaging holes 15, 16, ... . The locking meter 18 is movably guided in a guide case 19 which is fixed to the guide member 9, and urged by a spring 20 to move in a direction for inserting the engaging projection 17 in any one of the engaging holes 15, 16, ... . The locking member 18 is provided with a part engageable with a cam member 23 which is movable in a direction perpendicular to that of the movement of the locking member 28 for driving the locking member in a direction for disengaging said engaging portion 17 from an engaging hole 15, 16, ... . This part comprises an engaging pin 21 which, as shown in Fig. 10, passes through a slot 22 which is provided in the guide case 19, to outwardly project from the guide case 19 and engage the cam member 23.

In order to allow the aforementioned movement of the locking member 18, the structure shown in Fig. 10 is employed. Referring to Fig. 10, the cam member 23 is arranged to be movable along the guide member 9. The cam member 23 is partially received in a hole 24 which is formed in the guide member 9, to be movable in a range of extension of the hole 24. The cam member 23 is provided with a cam surface 25, which is in an inclined state, for engaging with the aforementioned engaging pin 21.

An operation for making the aforementioned cam member 23 move along the guide member 9 is provided by an operating member 26. As shown in Figs. 1 and 2, the operating member 26 is positioned on a forward end of the seat body 3 under the seat portion 5. This operating member 26 is horizontally movably held by a guide sleeve 27 which is fixed to the seat body 3. The operating member 26 is coupled with the aforementioned cam member 23 by a wire 28. The wire 28 is covered with an outer tube 29, which is fixed to the guide sleeve 27 and the guide member 9 respectively.

When an operator frontwardly pulls the operating member 26, this movement is transmitted to the cam member 23 through the wire 28. Thus, the cam member 23 frontwardly moves similarly to the operating member 26. Due to this movement of the cam member 23, the engaging pin 21 positioned on the cam face 25 is upwardly displaced as shown by a phantom line in Fig. 10. Consequently, the locking member 18 shown in Fig. 9 disengages the engaging projection 17 from the engaging hole 15, for example, against elasticity of the spring 20. Thus, the guide member 9 is movable with respect to the guide rail 8. During this movement, the force applied to the operating member 26 may be removed. When the engaging projection 17 is aligned with any one of the engaging holes 15, 16, ..., the locking member 18 is displaced to insert the same in the corresponding one of the engaging holes 15, 16, ... along elasticity of the spring 20. Due to such displacement of the locking member 18, the engaging pin 21 engaging with the cam face 25 forces the cam member 23 into the state shown in Fig. 10, so that the operating member 26 is returned to its original state in response.

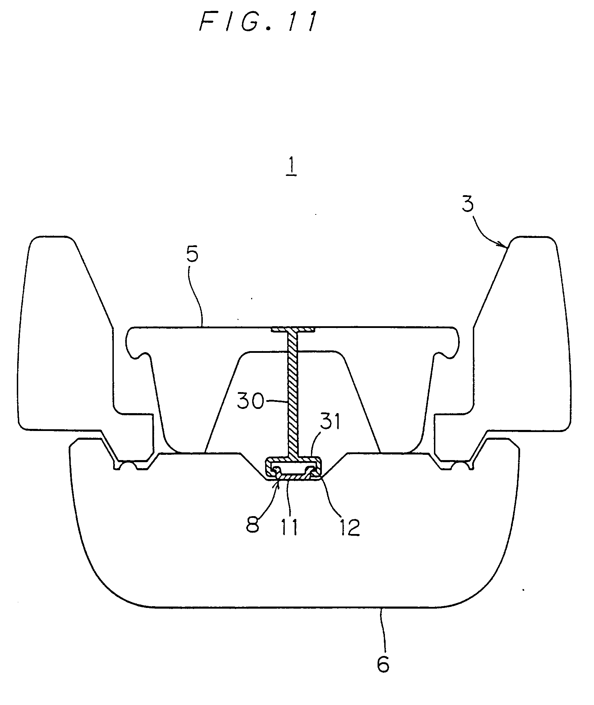

Coupling means for coupling the base 6 and the seat portion 5 is provided in order to maintain the seat portion 5 in a substantially constant inclination regardless of the aforementioned movement of the seat body 3. According to this embodiment, the coupling means is formed by the aforementioned linear portion 11 of the guide rail 8 and a coupling member 30 which is fixed to the seat portion 5. Fig. 11 shows the relation between the guide rail 8 and the coupling member 30 as viewed from a front portion of the child safety seat 1. An engaging portion 31 is provided on a lower end of the coupling member 30, to engage with the extensions 12 of the guide rail 8. The engaging portion 31 has a lateral C-shaped section, similarly to the principal part 13 of the guide member 9. This engaging portion 31 is movable along the linear portion 11 of the guide rail 8, while the coupling member 30 maintains the seat portion 5 and the linear portion 11 of the guide rail 8 at a substantially constant distance. Thus, it is possible to maintain the seat portion 5 in a substantially constant inclination regardless of the aforementioned movement of the seat body 3 along an arcuate track, as understood from Figs. 1 and 2 by contrast with each other.

While the present invention has been described with reference to the embodiment shown in the drawings, some modifications are available within the scope of the present invention.

For example, the positional relation between the guide rail 8 and the guide member 9 forming the relative movement guiding mechanism 7 may be reversed so that the guide rail 8 is provided on the seat body 3 and the guide member 9 is provided on the base 6. Further, the guide member 9 may be divided into a plurality of portions, to move along the guide rail 8 respectively.

The linear portion 11 of the guide rail 8 forming a part of the coupling means for maintaining the seat portion 5 in a substantially constant inclination may be provided by a member which is independent of the arcuate portion 10 of the guide rail 8. While this coupling means comprises the coupling member 30 which slides along the linear portion 11 of the guide rail 8, the same may alternatively be replaced by a mechanism formed by a plurality of links which couples the seat portion 5 and the base 6 with each other, for example.

## Claims

1. A child safety seat for an automobile, comprising:
a backrest portion (2) and a seat portion (5);
a seat body (3) forming said backrest portion (2);
a base (6) movably holding said seat body (3),
said base (6) and said seat body (3) being coupled with each other by a relative movement guiding mechanism (7) being formed by combination of a guide rail (8) having a portion (10) arcuately extending in a vertical plane and a guide member (9) being guided to move along said guide rail (8),
said relative movement guiding mechanism (7) comprising means (15, 16, 17, 18) for selectively fixing said guide member (9) on a plurality of positions of said guide rail (8); characterised in that said seat portion (5) is rotatably mounted to said seat body (3) and in that
coupling means (30) are provided for coupling said base (6) and said seat portion (5) with each other for maintaining said seat portion (5) in a substantially constant inclination regardless of movement of said seat body (3).

2. A child safety seat for an automobile in accordance with claim 1, wherein said guide rail (8) is provided on said base (6), and said guide member (9) is provided on said seat body (3).

3. A child safety seat for an automobile in accordance with claim 2, wherein said guide rail (8) has a portion (11) linearly extending from an end of said arcuately extending portion (10), said coupling means comprising a coupling member (30), being mounted on said seat portion (5), having an engaging portion (31) being movable while engaging with said linear portion (11).

4. A child safety seat for an automobile in accordance with claim 1, 2 or 3 wherein said guide rail (8) has a U-shaped section as a whole with extensions (12) being provided on both sides thereof, said guide member (9) having a lateral C-shaped section for engaging with said extensions (12).

5. A child safety seat for an automobile in accordance with anyone of claims 1 to 4, wherein said selectively fixing means comprises a plurality of engaging holes (15, 16) being provided to be distributed longitudinally along said guide rail (8), and a locking member (18) carried by said guide member (9) and having an engaging projection (17) which is movable for selective insertion in any one of said engaging holes (15, 16).

6. A child safety seat for an automobile in accordance with claim 5, further comprising a spring (20) for urging said locking member (18) to move in a direction for inserting said engaging projection (17) in any one of said engaging holes (15, 16).

7. A child safety seat for an automobile in accordance with claim 6, further comprising a cam member (23) engageable with a part (21) of said locking member (18) and movable in a direction perpendicular to that of movement of said locking member (18) for driving said locking member (18) in a direction for disengaging said engaging projection (17) from said any one of said engaging holes (15, 16), and an operating member (26) for providing an operation for driving said cam member (23).

8. A child safety seat for an automobile in accordance with claim 7, wherein said operating member (26) is positioned under said seat portion (5).

9. A child safety seat for an automobile in accordance with claim 8, further comprising a wire (28) for coupling said operating member (26) and said cam member (23) with each other.

10. A reclining seat comprising a seat body (3) defining a backrest portion (2) of the seat mounted to a base (6) for relative movement thereto along an arcuate path for adjusting the angle of the backrest portion (2) to the base (6), characterised by a seat portion (5) rotatably mounted to said seat body (3) for movement relative thereto, and coupling means (30) coupling said seat portion (5) with said base (6) for maintaining said seat portion (5) at a substantially constant inclination to said base (6) regardless of the angle to which the backrest portion (2) is adjusted.

## Patentansprüche

1. Kinder-Sicherheitssitz für ein Kraftfahrzeug, mit einer Lehne (2) und einem Sitzabschnitt (5);
einem Sitzkörper (3), der die Lehne (2) bildet; und mit
einer Basis (6), die den Sitzkörper (3) beweglich hält;
wobei die Basis (6) und der Sitzkörper (3) miteinander durch einen Führungsmechanismus (7) für eine Relativbewegung verbunden sind, der durch die Kombination einer Führungsschiene (8) mit einem Abschnitt (10), der sich in einer vertikalen Ebene bogenförmig erstreckt, mit einem Führungselement (9) gebildet wird, das so geführt ist, daß es sich längs der Führungsschiene (8) bewegt; und
wobei der Führungsmechanismus (7) für die Relativbewegung eine Einrichtung (15, 16, 17, 18) zum selektiven Fixieren des Führungselementes (9) an einer Anzahl von Positionen der Führungsschiene (8) umfaßt;
dadurch **gekennzeichnet**, daß der Sitzabschnitt (5) schwenkbar am Sitzkörper (3) angebracht ist; und daß
eine Verbindungseinrichtung (30) zum Verbinden der Basis (6) mit dem Sitzabschnitt (5) vorgesehen ist, die den Sitzabschnitt (5) unabhängig von einer Bewegung des Sitzkörpers (3) in einer im wesentlichen konstanten Neigung hält.

2. Kinder-Sicherheitssitz für ein Kraftfahrzeug nach Anspruch 1, wobei die Führungsschiene (8) an der Basis (6) und das Führungselement (9) am Sitzkörper (3) vorgesehen sind.

3. Kinder-Sicherheitssitz für ein Kraftfahrzeug nach Anspruch 2, wobei die Führungsschiene (8) einen Abschnitt (11) aufweist, der sich linear von einem Ende des bogenförmig verlaufenden Abschnitts (10) weg erstreckt, und wobei die Verbindungseinrichtung ein Verbindungselement (30) umfaßt, das am Sitzabschnitt (5) angebracht ist und das einen Eingreifabschnitt (31) aufweist, der beweglich ist, während er mit dem linearen Abschnitt (11) in Eingriff ist.

4. Kinder-Sicherheitssitz für ein Kraftfahrzeug nach Anspruch 1, 2 oder 3, wobei die Führungsschiene (8) als Ganzes einen U-förmigen Querschnitt mit Ansätzen (12) an beiden Seiten und das Führungselement (9) einen C-förmigen Querschnitt für den Eingriff mit den Ansätzen (12) hat.

5. Kinder-Sicherheitssitz für ein Kraftfahrzeug nach einem der Ansprüche 1 bis 4, wobei die selektive Fixiereinrichtung eine Anzahl von Eingriffslöchern (15, 16), die longitudinal längs der Führungsschiene (8) verteilt sind, und ein Verriegelungselement (18) umfaßt, das vom Führungselement (9) getragen wird und das einen Eingriffsvorsprung (17) aufweist, der zum selektiven Einführen in eines der Eingriffslöcher (15, 16) beweglich ist.

6. Kinder-Sicherheitssitz für ein Kraftfahrzeug nach Anspruch 5, mit einer Feder (20), die das Verriegelungselement (18) in die Richtung drückt, in der der Eingriffsvorsprung (17) in eines der Eingriffslöcher (15, 16) eingeführt wird.

7. Kinder-Sicherheitssitz für ein Kraftfahrzeug nach Anspruch 6, mit einem Nockenelement (23), das mit einem Teil (21) des Verriegelungselements (18) in Eingriff kommen kann und das in einer Richtung beweglich ist, die zur Bewegung des Verriegelungselements (18) senkrecht ist, um das Verriegelungselement (18) in eine Richtung zu treiben, in der der Eingriffsvorsprung (17) aus dem Eingriffsloch (15, 16) freikommt, und mit einem Betätigungselement (26) zum Betätigen des Nockenelementes (23).

8. Kinder-Sicherheitssitz für ein Kraftfahrzeug nach Anspruch 7, wobei das Betätigungselement (26) unter dem Sitzabschnitt (5) angebracht ist.

9. Kinder-Sicherheitssitz für ein Kraftfahrzeug nach Anspruch 8, mit einem Draht (28) zum Verbinden des Betätigungselements (26) mit dem Nockenelement (23).

10. Verstellbarer Sitz mit einem Sitzkörper (3), der eine Lehne (2) des Sitzes bildet, der an einer Basis (6) für eine Relativbewegung längs eines bogenförmigen Weges angebracht ist, um den Winkel der Lehne (2) zur Basis (6) einstellen zu können, **gekennzeichnet** durch einen Sitzabschnitt (5), der für eine Relativbewegung schwenkbar am Sitzkörper (3) angebracht ist, und durch eine Verbindungseinrichtung (30) zum Verbinden des Sitzabschnittes (5) mit der Basis (6), die den Sitzabschnitt (5) unabhängig vom Winkel, auf den die Lehne (2) eingestellt ist, in einer im wesentlichen konstanten Neigung zur Basis (6) hält.

## Revendications

1. Siège de sécurité pour enfant dans un véhicule automobile, comprenant:
une partie formant dossier (2) et une partie formant siège (5);
un corps (3) de siège formant ledit dossier (2);
une base (6) retenant de manière mobile ledit corps (3) de siège,
ladite base (6) et ledit corps (3) de siège étant réunis l'un à l'autre par un mécanisme de guidage (7) de mouvement relatif qui comprend, en combinaison, un rail de guidage (8) ayant une partie (10) qui s'étend de manière arquée dans un plan vertical et un élément de guidage (9) guidé pour se déplacer le long dudit rail de guidage (8),
ledit mécanisme de guidage (7) de mouvement relatif comportant un moyen (15, 16, 17, 18) pour fixer de manière sélective ledit élément de guidage (9) dans plusieurs positions sur ledit rail de guidage (8); caractérisé en ce que ladite partie formant siège (5) est montée de manière rotative sur ledit corps (3) de siège et en ce que des moyens de liaison (30) sont prévus pour relier l'une à l'autre ladite base (6) et ladite partie formant siège (5) pour maintenir ladite partie formant siège (5) inclinée d'une manière sensiblement constante indépendamment du déplacement dudit corps (3) de siège.

2. Siège de sécurité pour enfant dans un véhicule automobile selon la revendication 1, dans lequel ledit rail de guidage (8) est disposé sur ladite base (6), et ledit élément de guidage (9) est disposé sur ledit corps (3) de siège.

3. Siège de sécurité pour enfant dans un véhicule automobile selon la revendication 2, dans lequel ledit rail de guidage (8) a une partie (11) qui s'étend de manière linéaire depuis une extrémité de ladite partie arquée (10), les moyens de liaison comprenant un élément de liaison (30), monté sur ladite partie formant siège (5), dont une partie d'enclenchement (31) est mobile tout en s'enclenchant avec ladite partie linéaire (11).

4. Siège de sécurité pour enfant dans un véhicule automobile selon la revendication 1, 2 ou 3, dans lequel ledit rail de guidage (8) a globalement, en coupe, une forme en U avec des prolongements (12) disposés de part et d'autre de celui-ci, ledit élément de guidage (9) ayant en coupe une forme latérale en C destinée à coopérer avec lesdits prolongements (12).

5. Siège de sécurité pour enfant dans un véhicule automobile selon l'une quelconque des revendications 1 à 4, dans lequel ledit moyen de fixation sélective comporte plusieurs trous d'enclenchement (15, 16) disposés pour être répartis longitudinalement le long dudit rail de guidage (8), et un élément de verrouillage porté par ledit élément de guidage (9) et ayant une saillie d'enclenchement (17) qui est mobile pour s'introduire de manière sélective dans l'un quelconque des trous d'enclenchement (15, 16).

6. Siège de sécurité pour enfant dans un véhicule automobile selon la revendication 5, comportant en outre un ressort (20) pour pousser ledit élément de verrouillage (18) afin qu'il se déplace dans une direction pour introduire ladite saillie d'enclenchement (17) dans l'un quelconque desdits trous d'enclenchement (15, 16).

7. Siège de sécurité pour enfant dans un véhicule automobile selon la revendication 6, comportant en outre un élément formant came (23) pouvant coopérer avec une partie (21) dudit élément de verrouillage (18) et mobile dans une direction perpendiculaire à celle du déplacement dudit élément de verrouillage (18) pour entraîner ledit élément de verrouillage (18) dans une direction pour dégager ladite saillie d'enclenchement (17) dudit trou quelconque parmi lesdits trous d'enclenchement (15, 16), et un organe d'actionnement (26) pour réaliser une manoeuvre d'entraînement dudit élément formant came (23).

8. Siège de sécurité pour enfant dans un véhicule automobile selon la revendication 7, dans lequel ledit organe d'actionnement (26) est placé sous ladite partie formant siège (5).

9. Siège de sécurité pour enfant dans un véhicule automobile selon la revendication 8, comportant en outre un câble (28) pour relier l'un à l'autre ledit organe d'actionnement (26) et ledit élément formant came (23).

10. Siège couchette comprenant un corps (3) de siège définissant une partie formant dossier (2) du siège montée sur une base (6) pour effectuer par rapport à celui-ci un déplacement relatif sur un parcours arqué pour régler l'angle de la partie formant dossier (2) par rapport à la base (6), caractérisé par une partie formant siège (5) montée de manière rotative sur ledit corps (3) de siège pour se déplacer par rapport à celui-ci, et des moyens de liaison (30) reliant ladite partie formant siège (5) à ladite base (6) pour maintenir sensiblement constante l'inclinaison de ladite partie formant siège (5) par rapport à ladite base (6) indépendamment de l'angle de réglage de la partie formant dossier (2).
